# EUROPEAN PATENT APPLICATION

(11) **EP 3 358 509 A1**
(43) Date of publication of application: **08.08.2018**
(21) Application number: 15905243.0
(22) Date of filing: 22.12.2015
(51) Int. Cl.: G06Q 10/04

(54) **METHOD, APPARATUS AND DEVICE FOR ACQUIRING AREA WHERE DEMANDS DO NOT MATCH TRANSPORT CAPACITY IN VEHICLE USAGE SERVICE, AND NON-VOLATILE COMPUTER STORAGE MEDIUM**

(30) Priority: 30.09.2015 CN 201510640690
(71) Applicant: Baidu Online Network Technology (Beijing) Co., Ltd, Beijing 100085 (CN)
(72) Inventor: WANG, Chao, Beijing 100085 (CN); WANG, Yonghui, Beijing 100085 (CN)
(74) Representative: dompatent von Kreisler Selting Werner - Partnerschaft von Patent- und Rechtsanwälten mbB
(86) International application number: PCT/CN2015/098279
(87) International publication number: WO 2017/054333

(57) **Abstract**

Embodiments of the present disclosure provide a method and device for obtaining a demand-transport capacity unmatched region in car calling services, an apparatus and non-volatile computer storage medium. The method comprises: obtaining data of departure coordinates and destination coordinates of the car-call respectively from a plurality of historical order data; clustering the data of the departure coordinates and destination coordinates respectively to obtain a departure coordinate cluster set and a destination coordinate cluster set; building M×N demand regions respectively from M departure coordinate clusters in the departure coordinate cluster set and N destination coordinate clusters in the destination coordinate cluster set; obtaining a demand region in which a ratio of the number of accepted orders of the user to a total number of orders is less than a preset order-accepting ratio threshold from the M×N demand regions as the demand-transport capacity unmatched region. Embodiments of the present disclosure may be employed to purposefully increase subsidy for car owners in the demand-transport capacity unmatched region to improve the car owners' activity in taking orders, achieve precise subsidy provision for the car owners, and improve the efficiency in using the promotional fees.

## Description

The present disclosure claims priority from the Chinese patent application No.201510640690.1 entitled "Method and Apparatus for Obtaining Demand-transport capacity Unmatched Region in Car-Calling Services" filed on the filing date September 30, 2015, the disclosure of which is hereby incorporated by reference in its entirety.

### Field of the Disclosure

The present disclosure relates to the technical field of computers, and particularly to a method and device for obtaining a demand-transport capacity unmatched region in car calling services, an apparatus and non-volatile computer storage medium.

### Background of the Disclosure

As people's living standard rises continuously, their travel manners get increasingly diversified and change from an initial manner of travelling by a public transport vehicle to a manner of travelling by a taxi, a dedicated car, a quick car, carpooling, or hitchhiking in a market collectively called a car-calling market. Furthermore, due to convenience and fastness of car-calling services, these Internet car-calling services appeals to people increasingly.

Car-calling demands mainly concentrate between a resident concentration region and a business region where companies concentrate. When a passenger needs to call a car, he sends an order to a server through the Internet, the server sends the order to a driver within a predetermined range of distance from the passenger, and the driver, after receiving the order, may contact the passenger in a manner for example by making a phone call to complete the order.

However, the transport capacity of the car-calling services is completely provided by discrete car owners, and the car-calling service provider cannot directly control the actual transport capability. As such, a large number of car owners concentrate at the resident concentration region and business region where companies concentrate, and very few car owners appear in other regions, so there appear situations in which the demands are unmatched with the transport capability.

### Summary of the Disclosure

Embodiments of the present disclosure provide a method and device for obtaining a demand-transport capacity unmatched region in car calling services, an apparatus and non-volatile computer storage medium. The demand-transport capacity unmatched region is determined by comparing a ratio of the number of accepted orders of the user to a total number of orders in built M×N demand regions with a preset order-accepting ratio threshold, thereby purposefully increasing subsidy for car owners in the demand-transport capacity unmatched region to improve the car owners' activity in taking orders, achieve precise subsidy provision for the car owners, and improve the efficiency in using the promotional fees.

To achieve the objective, embodiments of the present disclosure provide a method for obtaining a demand-transport capacity unmatched region in car calling services. The method comprises: obtaining data of departure coordinates and destination coordinates of the car call respectively from a plurality of historical order data; clustering the data of the departure coordinates and destination coordinates respectively to obtain a departure coordinate cluster set and a destination coordinate cluster set; building M×N demand regions respectively from M departure coordinate clusters in the departure coordinate cluster set and N destination coordinate clusters in the destination coordinate cluster set; obtaining a demand region in which a ratio of the number of accepted orders of the user to a total number of orders is less than a preset order-accepting ratio threshold from the M×N demand regions as the demand-transport capacity unmatched region.

Optionally, the clustering the data of the departure coordinates and destination coordinates respectively to obtain a departure coordinate cluster set and a destination coordinate cluster set comprises: respectively building a departure coordinate set and a destination coordinate set according to data of the departure coordinates and the destination coordinates; clustering the departure coordinate set and destination coordinate set respectively according to a preset clustering algorithm to obtain the departure coordinate cluster set and the destination coordinate cluster set.

Optionally, the clustering algorithm is a distance-based clustering algorithm or a density-based clustering algorithm.

Optionally, the obtaining a demand region in which a ratio of the number of accepted orders of the user to a total number of orders is less than a preset order-accepting ratio threshold from the obtained multiple demand regions as the demand-transport capacity unmatched region comprises: calculating a ratio of the number of accepted orders of the user to a total number of orders in each demand region according to the departure coordinates and destination coordinates in the plurality of historical order data; taking a demand region in which the ratio of the number of accepted orders of the user to a total number of orders is less than the preset order-accepting ratio threshold as the demand-transport capacity unmatched region.

Optionally, the total number of orders in each demand region does not include orders initiatively cancelled by the user.

To achieve the objective, embodiments of the present disclosure further provide an apparatus for obtaining a demand-transport capacity unmatched region in car calling services. The apparatus comprises: a coordinate data obtaining module configured to obtain data of departure coordinates and destination coordinates of the car call from a plurality of historical order data; a clustering module configured to cluster the data of the departure coordinates and destination coordinates respectively to obtain a departure coordinate cluster set and a destination coordinate cluster set; a demand region building module configured to build M×N demand regions respectively from M departure coordinate clusters in the departure coordinate cluster set and N destination coordinate clusters in the destination coordinate cluster set; an unmatched region obtaining module configured to obtain a demand region in which a ratio of the number of accepted orders of the user to a total number of orders is less than a preset order-accepting ratio threshold from the M×N demand regions as the demand-transport capacity unmatched region.

Optionally, the clustering module comprises: a coordinate set building unit configured to respectively build a departure coordinate set and a destination coordinate set according to data of the departure coordinates and the destination coordinates; a coordinate set clustering unit configured to cluster the departure coordinate set and destination coordinate set respectively according to a preset clustering algorithm to obtain a departure coordinate cluster set and a destination coordinate cluster set.

Optionally, the clustering algorithm is a distance-based clustering algorithm or a density-based clustering algorithm.

Optionally, the unmatched region obtaining module comprises: an order-accepting ratio calculating unit configured to calculate a ratio of the number of accepted orders of the user to a total number of orders in each demand region according to the departure coordinates and destination coordinates in the plurality of historical order data; an unmatched region obtaining unit configured to take a demand region in which the ratio of the number of accepted orders of the user to a total number of orders is less than the preset order-accepting ratio threshold as the demand-transport capacity unmatched region.

Optionally, the total number of orders in each demand region does not include orders initiatively cancelled by the user.

To achieve the objective, embodiments of the present disclosure further provide an apparatus, comprising
one or more processors;
a memory;
one or more programs stored in the memory and configured to execute the following operations when executed by the one or more processors:
obtaining data of departure coordinates and destination coordinates of the car call respectively from a plurality of historical order data;
clustering the data of the departure coordinates and destination coordinates respectively to obtain a departure coordinate cluster set and a destination coordinate cluster set;
building M×N demand regions respectively from M departure coordinate clusters in the departure coordinate cluster set and N destination coordinate clusters in the destination coordinate cluster set;
obtaining a demand region in which a ratio of the number of accepted orders of the user to a total number of orders is less than a preset order-accepting ratio threshold from the M×N demand regions as the demand-transport capacity unmatched region.

To achieve the objective, embodiments of the present disclosure further provide a non-volatile computer storage medium in which one or more programs are stored, an apparatus being enabled to execute the following operations when said one or more programs are executed by the apparatus:
obtaining data of departure coordinates and destination coordinates of the car call respectively from a plurality of historical order data;
clustering the data of the departure coordinates and destination coordinates respectively to obtain a departure coordinate cluster set and a destination coordinate cluster set;
building M×N demand regions respectively from M departure coordinate clusters in the departure coordinate cluster set and N destination coordinate clusters in the destination coordinate cluster set;
obtaining a demand region in which a ratio of the number of accepted orders of the user to a total number of orders is less than a preset order-accepting ratio threshold from the M×N demand regions as the demand-transport capacity unmatched region.

According to the method and apparatus for obtaining the demand-transport capacity unmatched region in car-calling services according to the embodiments of the present disclosure, data of departure coordinates and destination coordinates obtained from a plurality of historical order data are clustered to build M×N demand regions, the ratio of the number of accepted orders of the user to a total number of orders in the M×N demand regions is compared with the preset order-accepting ratio threshold, and the demand-transport capacity unmatched region is determined, thereby purposefully increasing subsidy for car owners in the demand-transport capacity unmatched region to improve the car owners' activity in taking orders, achieve precise subsidy provision for the car owners, and improve the efficiency in using the promotional fees.

### Brief Description of Drawings

Fig. 1 is a flow chart of a method of obtaining a demand-transport capacity unmatched region in car-calling services according to an embodiment of the present disclosure;
Fig. 2 is another flow chart of a method of obtaining a demand-transport capacity unmatched region in car-calling services according to an embodiment of the present disclosure;
Fig. 3 is a schematic view showing departure points and destination points of orders in which departure points and destination points are not clustered according to an example of the present disclosure;
Fig. 4 is a schematic view showing departure points and destination points of orders in which departure points and destination points are clustered according to an example of the present disclosure;
Fig. 5 is a structural schematic view of an apparatus of obtaining a demand-transport capacity unmatched region in car-calling services according to an embodiment of the present disclosure;
Fig. 6 is another structural schematic view of an apparatus of obtaining a demand-transport capacity unmatched region in car-calling services according to an embodiment of the present disclosure;
Fig. 7 is a further structural schematic view of an apparatus of obtaining a demand-transport capacity unmatched region in car-calling services according to an embodiment of the present disclosure.

### Detailed Description of Preferred Embodiments

The inventive idea of the present disclosure is as follows: clustering data of departure coordinates and destination coordinates obtained from a plurality of historical order data to build M×N demand regions, comparing a ratio of the number of accepted orders of the user to a total number of orders in the M×N demand regions with a threshold value, and determining a demand-transport capacity unmatched region, thereby purposefully increasing subsidy for car owners in the demand-transport capacity unmatched region to improve the car owners' activity in taking orders, achieve precise subsidy provision for the car owners, and improve the efficiency in using the promotional fees.

The method and apparatus for obtaining a demand-transport capacity unmatched region in car-calling services according to embodiments of the present disclosure will be described below in detail with reference to figures.

### Embodiment 1

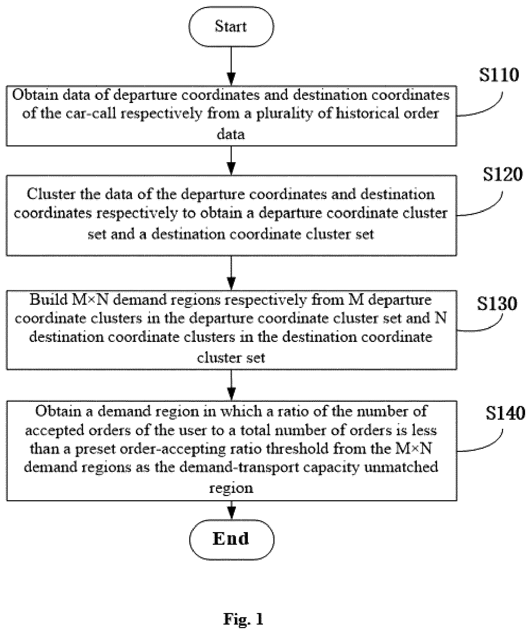

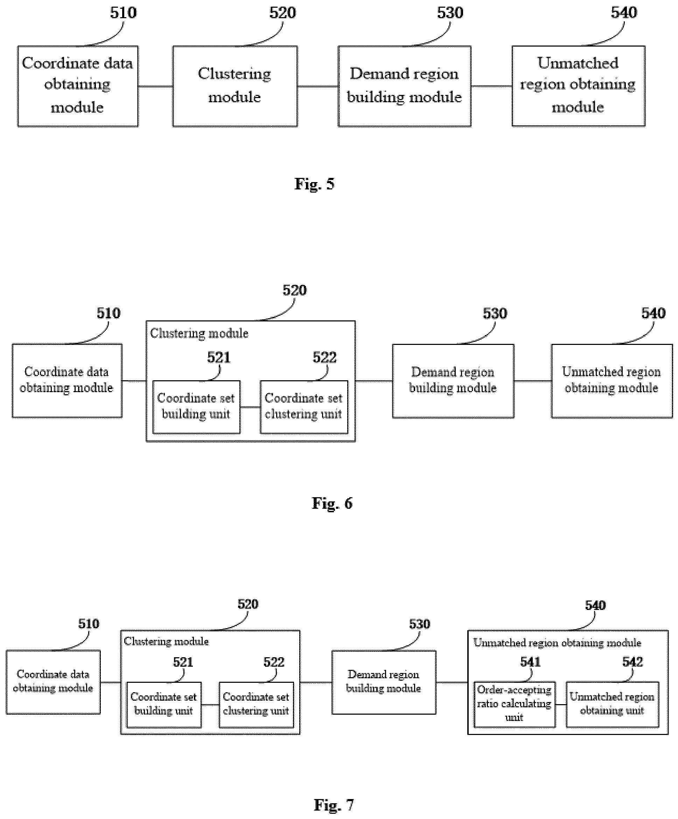

Fig. 1 is a flow chart of a method of obtaining a demand-transport capacity unmatched region in car-calling services according to an embodiment of the present disclosure. The method is implemented by a computer system including the apparatus as shown in Fig. 5.

As shown in Fig. 1, in step S110, data of departure coordinates and destination coordinates of the car call are respectively obtained from a plurality of historical order data.

Specifically, when the user calls a car, he is usually required to set information of a departure and a destination of the travel in an order, for example, the departure is a residential area A, and the destination is a university B. When analysis needs to be performed for whether the demands for car-calling services are matched with the transport capacity in respective regions, it is feasible to obtain data of car-calling orders received within a certain time interval, extract departure information and destination information in data of each order, determine coordinates of the departure and destination, namely departure coordinates and destination coordinates, thereby obtaining data of the departure coordinates and destination coordinates of the car-calling service from a plurality of historical order data, wherein the historical order data may be for example, but not limited to, data of historical taxi-calling orders, data of historical dedicated car-calling orders or data of historical hitchhike-calling orders.

At step S120, the data of the departure coordinates and destination coordinates are respectively clustered to obtain a departure coordinate cluster set and a destination coordinate cluster set.

Specifically, similarity analysis is performed for data of all obtained departure coordinates to obtain data of a plurality of departure coordinates that are similar to one another, and form a departure coordinate cluster set, and data of all obtained departure coordinates may be classified into a plurality of departure coordinate cluster sets in the similar manner. The data of all obtained destination coordinates may be classified into a plurality of destination coordinate cluster sets in the same processing manner as the manner of obtaining the plurality of departure coordinate cluster sets.

At step S130, M×N demand regions are respectively built from M departure coordinate clusters in the departure coordinate cluster set and N destination coordinate clusters in the destination coordinate cluster set.

Specifically, it is feasible to build M×N demand regions by selecting any departure coordinate cluster from the departure coordinate cluster set, taking the selected departure coordinate cluster as the departure, and taking N destination coordinate clusters in the destination coordinate cluster set as the destination. Since the departure coordinate cluster set includes M departure coordinate clusters, M×N demand regions may be obtained in the above manner.

At step S140, a demand region in which a ratio of the number of accepted orders of the user to a total number of orders is less than a preset order-accepting ratio threshold is obtained from the M×N demand regions as the demand-transport capacity unmatched region.

Wherein, the order-accepting ratio threshold may be set according to actual situations, and a specific value may be 0.5, 0.6 or the like.

Specifically, data of departure coordinates and destination coordinates are respectively obtained from a plurality of historical order data, and departure and destination data consisting of the departure coordinates and destination coordinates are mapped to the M×N demand regions, and the ratio of the number of accepted orders of the user to a total number of orders is calculated in the M×N demand regions. If the ratio in a certain demand region is less than the preset order-accepting ratio threshold in the demand region, the demand region may be determined as the demand-transport capacity unmatched region, otherwise the demand region is a demand-transport capacity matched region.

According to the method of obtaining the demand-transport capacity unmatched region in car-calling services according to the embodiment of the present disclosure, data of departure coordinates and destination coordinates obtained from a plurality of historical order data are clustered to build M×N demand regions, the ratio of the number of accepted orders of the user to a total number of orders in the M×N demand regions is compared with the preset order-accepting ratio threshold, and the demand-transport capacity unmatched region is determined, thereby purposefully increasing subsidy for car owners in the demand-transport capacity unmatched region to improve the car owners' activity in taking orders, achieve precise subsidy provision for the car owners, and improve the efficiency in using the promotional fees.

### Embodiment 2

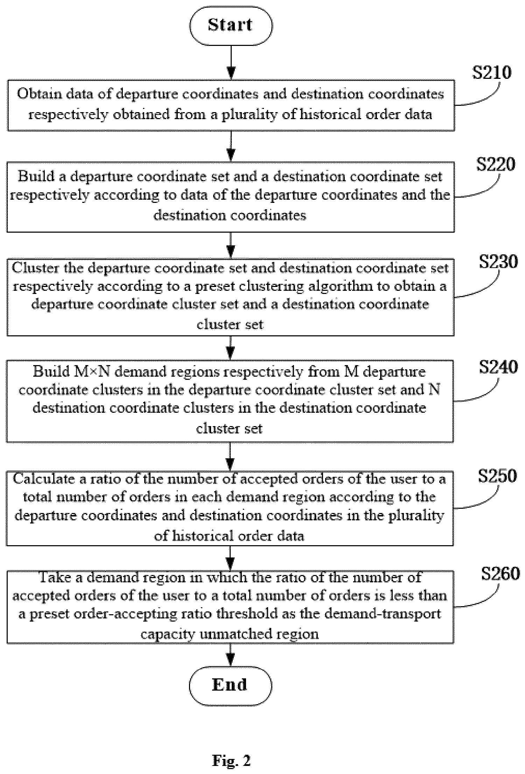

Fig. 2 is a flow chart of another embodiment of a method of obtaining a demand-transport capacity unmatched region in car-calling services according to the present disclosure. The present embodiment may be considered as another specific implementation scheme of Fig. 1.

As shown in Fig. 2, at step S210, data of departure coordinates and destination coordinates are respectively obtained from a plurality of historical order data.

Wherein, the historical order data may be for example, but not limited to, data of historical taxi-calling orders, data of historical dedicated car-calling orders or data of historical hitchhike-calling orders.

The processing in step S210 is the same as the processing in the above step S110, and will not be detailed any more.

At step S220, a departure coordinate set and a destination coordinate set are respectively built according to data of the departure coordinates and the destination coordinates.

Specifically, it is feasible to set the obtained departure coordinates on coordinate axes, build a departure coordinate set from all departure coordinates on the coordinate axes, determine a distance between any two departure points in the departure coordinate set, and visually determine from the coordinate axes whether there are a plurality of departure points arranged closely. A destination coordinate set may be built from the obtained destination coordinate data in the same processing manner, and the destination coordinates may be arranged respectively on the coordinate axes.

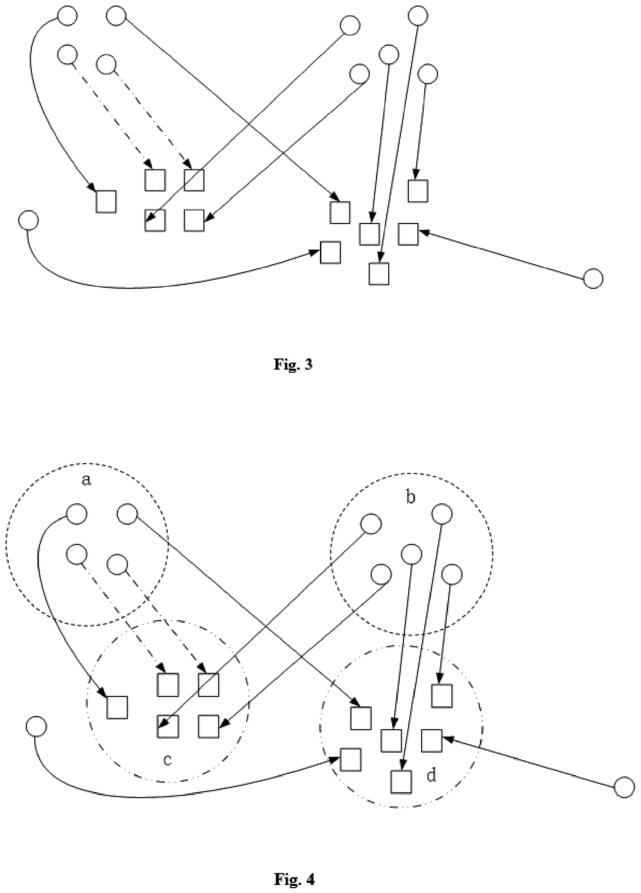

Fig. 3 is a schematic view showing departure points and destination points of orders in which departure points and destination points are not clustered according to an example of the present disclosure, wherein circles represent departure points, squares represent destinations, solid lines represent routes on which orders have been completed (i.e., after the passenger sends an order, the driver accepts the order), dotted lines represent routes on which orders have not been completed (i.e., after the passenger sends an order, no drivers accept the order).

At step S230, the departure coordinate set and destination coordinate set are respectively clustered according to a preset clustering algorithm to obtain a departure coordinate cluster set and a destination coordinate cluster set.

Wherein, the clustering algorithm may include many algorithms, for example, classification-based clustering algorithm, grid-based clustering algorithm or model-based clustering algorithm.

Specifically, a clustering algorithm may be preset; when the demand-transport capacity unmatched region needs to be obtained, it is feasible to cluster the departure coordinate set by the preset clustering algorithm to obtain one or more groups of data of multiple departure coordinates which are similar to one another, and set the obtained one or more groups of data as the departure coordinate cluster set, then, cluster the destination coordinate set by the preset clustering algorithm to obtain one or more groups of data of multiple destination coordinates which are similar to one another, and set the obtained one or more groups of data as the destination coordinate cluster set. The clustering processing for the departure coordinate set or destination coordinate set by means of classification-based clustering algorithm, grid-based clustering algorithm or model-based clustering algorithm may be performed in current calculating manners.

Furthermore, to make the method of obtaining the demand-transport capacity unmatched region in car-calling services according to the present disclosure convenient and quick during implementation, the clustering algorithm may be a distance-based clustering algorithm or a density-based clustering algorithm.

As for the departure coordinate cluster set or destination coordinate cluster set obtained by the distance-based clustering algorithm, departure points or destination points in the same cluster might be close or related to one another, whereas departure points or destination points in different clusters might be away from or different from one another as much as possible. As for the departure coordinate cluster set or destination coordinate cluster set obtained by the density-based clustering algorithm, the clustering calculation is performed not based on various distances, but on distribution density of departure points or destination points. This may overcome the drawback of the distance-based clustering algorithm that only "circle-like" cluster can be found. The guidance idea of the density-based clustering algorithm is that so long as the density of points in a region is larger than a preset threshold, these points are added to a cluster close to them.

Based on the example shown in Fig. 3, Fig. 4 is a schematic view showing departure points and destination points of orders in which departure points and destination points are clustered according to an example of the present disclosure. As shown in Fig. 4, the departure points and destination points are clustered respectively by using the clustering algorithm to respectively obtain two departure coordinate cluster sets a and b, and two destination coordinate cluster sets c and d.

At step S240, M×N demand regions are respectively built from M departure coordinate clusters in the departure coordinate cluster set and N destination coordinate clusters in the destination coordinate cluster set.

The processing in step S240 is the same as the processing in the above step S130, and will not be detailed any more.

As shown in Fig. 4, four demand regions ac, ad, bc and bd may be built using the departure coordinate cluster set and the destination coordinate cluster set.

At step S250, a ratio of the number of accepted orders of the user to a total number of orders in each demand region is calculated according to the departure coordinates and destination coordinates in the plurality of historical order data.

Wherein, the total number of orders in each demand region does not include orders initiatively cancelled by the user.

Specifically, departure coordinates and destination coordinates are respectively obtained from the plurality of historical order data, and the departure and destination data consisting of the departure coordinates and destination coordinates are mapped to the M×N demand regions. In the example shown in Fig. 4, the demand region ac includes totally three orders, wherein two orders are routes where orders have been completed, and then the order-accepting ratio (namely, a ratio of the number of accepted orders of the user to the total number of orders) is 1/3. The order-accepting ration in the remaining three demand regions ad, bc and bd is 1.

At step S260, a demand region in which the ratio of the number of accepted orders of the user to a total number of orders is less than a preset order-accepting ratio threshold is taken as the demand-transport capacity unmatched region.

Based on the example shown in Fig. 4, if the preset order-accepting ratio threshold is set 80%, since the order-accepting ratio of the demand region is lower than the preset order-accepting ratio threshold, the demand region ac is the demand-transport capacity unmatched region, and demand regions ad, bc and bd are demand-transport capacity matched regions.

According to the method of obtaining the demand-transport capacity unmatched region in car-calling services according to the embodiment of the present disclosure, data of departure coordinates and destination coordinates obtained from a plurality of historical order data are clustered by the distance-based clustering algorithm or density-based clustering algorithm to build M×N demand regions, the ratio of the number of accepted orders of the user to a total number of orders in the M×N demand regions is compared with the preset order-accepting ratio threshold, and the demand-transport capacity unmatched region is determined, thereby purposefully increasing subsidy for car owners in the demand-transport capacity unmatched region to improve the car owners' activity in taking orders, achieve precise subsidy provision for the car owners, and improve the efficiency in using the promotional fees.

### Embodiment 3

Based on the same technical idea, the embodiment of the present disclosure further provided an apparatus for obtaining the demand-transport capacity unmatched region in car-calling services. As shown in Fig. 5, the apparatus comprises a coordinate data obtaining module 510, a clustering module 520, a demand region building module 530 and an unmatched region obtaining module 540.

The coordinate data obtaining module 510 is configured to obtain data of departure coordinates and destination coordinates of the car-call respectively from a plurality of historical order data.

The clustering module 520 is configured to cluster the data of the departure coordinates and destination coordinates respectively to obtain a departure coordinate cluster set and a destination coordinate cluster set.

The demand region building module 530 is configured to build M×N demand regions respectively from M departure coordinate clusters in the departure coordinate cluster set and N destination coordinate clusters in the destination coordinate cluster set.

The unmatched region obtaining module 540 is configured to obtain a demand region in which a ratio of the number of accepted orders of the user to a total number of orders is less than a preset order-accepting ratio threshold from the M×N demand regions as the demand-transport capacity unmatched region.

Furthermore, on the basis of the embodiment shown in Fig. 5, the clustering module 520 shown in Fig. 6 comprises: a coordinate set building unit 521 configured to respectively build a departure coordinate set and a destination coordinate set according to data of the departure coordinates and the destination coordinates; a coordinate set clustering unit 522 configured to cluster the departure coordinate set and destination coordinate set respectively according to a preset clustering algorithm to obtain a departure coordinate cluster set and a destination coordinate cluster set.

In addition, the clustering algorithm is a distance-based clustering algorithm or a density-based clustering algorithm.

Furthermore, on the basis of the embodiment shown in Fig. 6, the unmatched region obtaining module 540 shown in Fig. 7 comprises: an order-accepting ratio calculating unit 541 configured to calculate a ratio of the number of accepted orders of the user to a total number of orders in each demand region according to the departure coordinates and destination coordinates in the plurality of historical order data; an unmatched region obtaining unit 542 configured to take a demand region in which the ratio of the number of accepted orders of the user to a total number of orders is less than the preset order-accepting ratio threshold as the demand-transport capacity unmatched region.

In addition, the total number of orders in each demand region does not include orders initiatively cancelled by the user.

According to the apparatus for obtaining the demand-transport capacity unmatched region in car-calling services according to the embodiment of the present disclosure, data of departure coordinates and destination coordinates obtained from a plurality of historical order data are clustered by the distance-based clustering algorithm or density-based clustering algorithm to build M×N demand regions, the ratio of the number of accepted orders of the user to a total number of orders in the M×N demand regions is compared with the preset order-accepting ratio threshold, and the demand-transport capacity unmatched region is determined, thereby purposefully increasing subsidy for car owners in the demand-transport capacity unmatched region to improve the car owners' activity in taking orders, achieve precise subsidy provision for the car owners, and improve the efficiency in using the promotional fees.

It needs to be appreciated that according to needs of implementation, steps/parts described in the present application may be divided into more steps/parts, and two or more steps/parts or partial operations of steps/parts may be combined into new steps/parts, to achieve the objective of the present disclosure.

The above method according to the present disclosure may be implemented in hardware or firmware, or may be implemented as software or computer codes that may be stored in a recording medium such as CD ROM, RAM, floppy disk, hard disk or compact disk, or may be implemented as computer codes that are downloaded through the network and originally stored in a remote recording medium or non-transitory machine-readable medium and will be stored in a local recording medium. Therefore, the method described here may be processed by software stored on a recording medium using a general-purpose computer, a dedicated processor or a programmable or dedicated hardware (such as ASIC or FPGA). It may be appreciated that the computer, processor, microprocessor controller or programmable hardware comprises a storage component (such as RAM, ROM, flash memory) that may store or receive software or computer codes. When software or computer codes are accessed and executed by the computer, processor or hardware, the processing method described here is implemented. In addition, when the general-purpose computer accesses the codes for implementing the processing shown here, execution of the codes converts the general-purpose computer into a dedicated computer for executing the processing shown here.

What are described above are only specific embodiments of the present disclosure, but the protection scope of the present disclosure is not limited to this. Those skilled in the art, within the technical scope revealed by the present disclosure, can easily envisage variations or substitutions, which all are covered by the protection scope of the present disclosure. Hence, the protection scope of the present disclosure should be subject to the protection scope of the appended claims.

## Claims

1. A method for obtaining a demand-transport capacity unmatched region in car calling services, wherein the method comprises:
obtaining data of departure coordinates and destination coordinates of the car-call respectively from a plurality of historical order data;
clustering the data of the departure coordinates and destination coordinates respectively to obtain a departure coordinate cluster set and a destination coordinate cluster set;
building M×N demand regions respectively from M departure coordinate clusters in the departure coordinate cluster set and N destination coordinate clusters in the destination coordinate cluster set;
obtaining a demand region in which a ratio of the number of accepted orders of the user to a total number of orders is less than a preset order-accepting ratio threshold from the M×N demand regions as the demand-transport capacity unmatched region.

2. The method according to claim 1, wherein the clustering the data of the departure coordinates and destination coordinates respectively to obtain a departure coordinate cluster set and a destination coordinate cluster set comprises:
respectively building a departure coordinate set and a destination coordinate set according to data of the departure coordinates and the destination coordinates;
clustering the departure coordinate set and destination coordinate set respectively according to a preset clustering algorithm to obtain the departure coordinate cluster set and the destination coordinate cluster set.

3. The method according to claim 2, wherein the clustering algorithm is a distance-based clustering algorithm or a density-based clustering algorithm.

4. The method according to claim 3, wherein the obtaining a demand region in which a ratio of the number of accepted orders of the user to a total number of orders is less than a preset order-accepting ratio threshold from the obtained multiple demand regions as the demand-transport capacity unmatched region comprises:
calculating a ratio of the number of accepted orders of the user to a total number of orders in each demand region according to the departure coordinates and destination coordinates in the plurality of historical order data;
taking a demand region in which the ratio of the number of accepted orders of the user to a total number of orders is less than the preset order-accepting ratio threshold as the demand-transport capacity unmatched region.

5. The method according to claim 4, wherein the total number of orders in each demand region does not include orders initiatively cancelled by the user.

6. A device for obtaining a demand-transport capacity unmatched region in car calling services, wherein the device comprises:
a coordinate data obtaining module configured to obtain data of departure coordinates and destination coordinates of the car-call from a plurality of historical order data;
a clustering module configured to cluster the data of the departure coordinates and destination coordinates respectively to obtain a departure coordinate cluster set and a destination coordinate cluster set;
a demand region building module configured to build M×N demand regions respectively from M departure coordinate clusters in the departure coordinate cluster set and N destination coordinate clusters in the destination coordinate cluster set;
an unmatched region obtaining module configured to obtain a demand region in which a ratio of the number of accepted orders of the user to a total number of orders is less than a preset order-accepting ratio threshold from the M×N demand regions as the demand-transport capacity unmatched region.

7. The device according to claim 6, wherein the clustering module comprises:
a coordinate set building unit configured to respectively build a departure coordinate set and a destination coordinate set according to data of the departure coordinates and the destination coordinates;
a coordinate set clustering unit configured to cluster the departure coordinate set and destination coordinate set respectively according to a preset clustering algorithm to obtain a departure coordinate cluster set and a destination coordinate cluster set.

8. The device according to claim 7, wherein the clustering algorithm is a distance-based clustering algorithm or a density-based clustering algorithm.

9. The device according to claim 8, wherein the unmatched region obtaining module comprises:
an order-accepting ratio calculating unit configured to calculate a ratio of the number of accepted orders of the user to a total number of orders in each demand region according to the departure coordinates and destination coordinates in the plurality of historical order data;
an unmatched region obtaining unit configured to take a demand region in which the ratio of the number of accepted orders of the user to a total number of orders is less than the preset order-accepting ratio threshold as the demand-transport capacity unmatched region.

10. The device according to claim 9, wherein the total number of orders in each demand region does not include orders initiatively cancelled by the user.

11. An apparatus, comprising
one or more processors;
a memory;
one or more programs stored in the memory and configured to execute the following operations when executed by the one or more processors:
obtaining data of departure coordinates and destination coordinates of the car call respectively from a plurality of historical order data;
clustering the data of the departure coordinates and destination coordinates respectively to obtain a departure coordinate cluster set and a destination coordinate cluster set;
building M×N demand regions respectively from M departure coordinate clusters in the departure coordinate cluster set and N destination coordinate clusters in the destination coordinate cluster set;
obtaining a demand region in which a ratio of the number of accepted orders of the user to a total number of orders is less than a preset order-accepting ratio threshold from the M×N demand regions as the demand-transport capacity unmatched region.

12. A non-volatile computer storage medium in which one or more programs are stored, an apparatus being enabled to execute the following operations when said one or more programs are executed by the apparatus:
obtaining data of departure coordinates and destination coordinates of the car call respectively from a plurality of historical order data;
clustering the data of the departure coordinates and destination coordinates respectively to obtain a departure coordinate cluster set and a destination coordinate cluster set;
building M×N demand regions respectively from M departure coordinate clusters in the departure coordinate cluster set and N destination coordinate clusters in the destination coordinate cluster set;
obtaining a demand region in which a ratio of the number of accepted orders of the user to a total number of orders is less than a preset order-accepting ratio threshold from the M×N demand regions as the demand-transport capacity unmatched region.
